# EUROPÄISCHE PATENTANMELDUNG

(11) **EP 4 644 453 A2**
(43) Veröffentlichungstag der Anmeldung: **05.11.2025**
(21) Anmeldenummer: 25194111.8
(22) Anmeldetag: 21.11.2018
(51) Int. Cl.: C08G 18/79

(54) **WÄSSRIGE ZUSAMMENSETZUNG UND WÄSSRIGES BESCHICHTUNGSMITTEL**

(30) Priorität: 21.11.2017 DE 102017127490
(62) Teilanmeldung aus: 18812089.3
(71) Anmelder: Brillux GmbH & Co. KG, 48163 Münster (DE)
(72) Erfinder: HÖRSTING, Ingo, 48317 Drensteinfurt (DE); THIELE, Kai, 48167 Münster (DE); FRERICK, Sebastian, 48155 Münster (DE); WONTORA, Beatrice, 48282 Emsdetten (DE)
(74) Vertreter: Cohausz & Florack

(57) **Zusammenfassung**

Dargestellt und beschrieben wird eine wässrige Zusammensetzung enthaltend, jeweils bezogen auf das Gesamtgewicht der Zusammensetzung, a. 3 bis 25 Gew.-% Bindemittel, b. 5 bis 25 Gew.-% Vernetzugnspolymer, c. 0,5 bis 10 Gew.-% Partikel mit einer mittleren Partikelgröße von 1 bis 20 µm, d. 0,01 bis 2 Gew.-% einer alkalischen Komponente, e. 30 bis 70 Gew.-% Wasser. Dargestellt und beschrieben werden ferner ein Herstellungsverfahren für die wässrige Zusammensetzung, ein Kit-of-parts umfassend die wässrige Zusammensetzung und einen Härter, sowie ein wässriges Beschichtungsmittel.

## Beschreibung

Die vorliegende Erfindung betrifft eine wässrige Zusammensetzung, ein Verfahren zur Herstellung der wässrigen Zusammensetzung, ein Kit-of-parts aus der Zusammensetzung und einem weiteren Mittel, das in der Lage ist, mit Carboxylgruppen einen Aktivester zu bilden, ein wässriges Beschichtungsmittel, das die wässrige Zusammensetzung und das Mittel, das in der Lage ist, mit Carboxylgruppen einen Aktivester zu bilden, enthält sowie die Verwendung des wässrigen Beschichtungsmittels als Lack.

Vor allem im Automotive-Bereich ist seit einiger Zeit eine Entwicklung zu sogenannten Softfeel-Beschichtungen zu beobachten. Derartige Softfeel-Beschichtungen bewirken ein besonderes Griffempfinden (Haptik), das sich als samtig, weich, gummiartig oder warm umschreiben lässt und als angenehm empfunden wird. Weiterhin verleihen derartige Softfeel-Beschichtungen der Oberfläche ein mattes Erscheinungsbild, das als ansprechend empfunden wird.

Im Automotive-Bereich können derartige Beschichtungen mit speziellen Maschinen und Verfahren, etwa in speziellen Beschichtungsanlagen, die mit erhöhten Temperaturen und/oder vermindertem Druck arbeiten, aufgebracht werden. Daher können viele Materialien und Materialkombinationen eingesetzt werden, die zum Beispiel in Lacken für den Innen- und/oder Außenbereich nicht verwendet werden können, da sie sich beispielsweise nicht gut applizieren lassen oder nur schlecht trocknen.

Lacke, insbesondere matte Lacke, leiden häufig unter dem Problem, dass sie dem Endverbraucher nicht als 1-Komponenten- (1K)-Systeme angeboten werden können. Stattdessen werden sie meist als 2-Komponenten- (2K)-Systeme, die normalerweise aus einem Stammlack und einem Härter bestehen, dem Anwender angeboten, der die beiden Komponenten unmittelbar vor der Anwendung vermischen muss. Dies bringt mehre Nachteile mit sich. Zum einen können auf diese Weise leicht Dosierungsfehler auftreten, aufgrund derer der Lack nicht vollständig aushärtet oder überschüssiger Härter unerwünschte Nebenreaktionen eingeht. Ferner ist das Zeitfenster bis zur Härtung klein, so dass der Anwender den vermischten Lack rasch auftragen muss. Durch dieses kurze Zeitfenster bedingt muss der Anwender auch die Menge an Lack, die er benötigt, genau kennen, um nicht weiterverwertbare Überschüsse möglichst gering zu halten. Schließlich sind die Härter reaktive Substanzen, die oft gesundheitsschädlich sind, so dass Anwender von 2K-Lacksystemen mit diesen gesundheitsschädlichen Substanzen umgehen müssen.

Lacke als 1K-Systeme sind bekannt, die Härtung beruht jedoch oft lediglich auf einer physikalischen Trocknung. Bei der Härtung solcher Lacke findet also keine chemische Vernetzung statt. Nachteilig daran ist die geringere mechanische und/oder chemische Widerstandsfähigkeit dieser Lacke.

Lacke als 1K-Systeme, bei denen bei der Härtung eine chemische Vernetzung stattfindet, sind ebenfalls bekannt. Dabei wird der Stammlack üblicherweise mit einem Härter vermischt, der im Vorfeld mit einem Blockierungsmittel umgesetzt wurde. Um jedoch die Härtung dieser Systeme zu bewirken, muss der Härter zunächst durch Aufheizen aktiviert werden, was einen zusätzlichen Arbeitsschritt bedeutet, gegebenenfalls unerwünschte Substanzen freisetzt und auch nicht immer möglich ist.

Aufgabe der Erfindung ist es, eine wässrige Zusammensetzung bereitzustellen, die Teil eines Kit-of-parts sein kann. Weitere Aufgabe der Erfindung ist es, einen Kit-of-parts bereitzustellen, der eine lange Lagerfähigkeit aufweist und/oder aus dessen Bestandteilen einfach ein wässriges Beschichtungsmittel erhalten werden kann.

Weitere Aufgabe der Erfindung ist es, ein wässriges Beschichtungsmittel bereitzustellen, das als Lack, insbesondere im Innen- und/oder Außenbereich angewendet werden kann.

Eine weitere Aufgabe der Erfindung ist es, ein wässriges Beschichtungsmittel bereitzustellen, das Anwender als Lack als 1K-System benutzen können. Dabei ist es insbesondere wünschenswert, wenn vor der Applikation des Lacks kein zusätzlicher Schritt, insbesondere kein Aktivierungsschritt durch den Anwender wie ein Aufheizschritt, nötig ist.

Eine weitere Aufgabe der Erfindung ist es, ein wässriges Beschichtungsmittel bereitzustellen, das Anwender als Lack als 1K-System, der ein langes Zeitfenster zur Anwendung hat, anwenden können und/oder bei dem der Anwender keine gesundheitsschädlichen Substanzen handhaben muss.

Eine weitere Aufgabe der Erfindung ist es, ein wässriges Beschichtungsmittel, insbesondere als Lack, bereitzustellen, das einen Softfeel-Effekt, insbesondere in Bezug auf das Griffempfinden und/oder auf den optischen Eindruck, zeigt und/oder eine gute mechanische und/oder chemische Widerstandfähigkeit aufweist und/oder eine gute Haftung an Oberflächen zeigt, auf die üblicherweise Lacke aufgetragen werden.

Alle oder einige dieser Aufgaben werden durch die in Punkt 1 und 17 angegebene wässrige Zusammensetzung, das in Punkt 14 angegebene Verfahren, das in Punkt 18 angegebenen Kit-of-parts, das in Punkt 20 angegebene wässrige Beschichtungsmittel sowie die in Punkt 23 angegebene Verwendung gelöst.

Vorteilhafte Ausgestaltungen sind in den abhängigen Punkten angegeben und werden nachfolgend im Einzelnen erläutert.

Die Erfindung stellt dementsprechend ein wässriges Beschichtungsmittel bereit, das als Lack, insbesondere als 1K-System, verwendet werden kann. Das erfindungsgemäße wässrige Beschichtungsmittel kann insbesondere ein langes Zeitfenster für die Anwendung aufweisen. Dennoch ist eine lange Lagerfähigkeit für solche Beschichtungsmittel wünschenswert. Hierfür stellt die Erfindung ein Kit-of-parts bereit, das eine wässrige Zusammensetzung und einen Härter umfasst. Diese beiden Bestandteile können in getrennten Gebinden aufbewahrt werden. Dadurch kann sich eine lange Lagerfähigkeit ergeben. Durch Vermischen der wässrigen Zusammensetzung mit dem Härter kann andererseits unkompliziert das erfindungsgemäße wässrige Beschichtungsmittel erhalten werden. Dementsprechend stellt die Erfindung ferner eine wässrige Zusammensetzung bereit, die Bestandteil des erfindungsgemäßen Kit-of-parts sein kann. Da der Härter des Kit-of-parts nur in geringen Mengen im erfindungsgemäßen wässrigen Beschichtungsmittel benötigt wird, können sich die Mengen der übrigen Komponenten der erfindungsgemäßen wässrigen Zusammensetzung und des erfindungsgemäßen wässrigen Beschichtungsmittels zumindest teilweise überschneiden. Nachfolgend wird zunächst die erfindungsgemäße wässrige Zusammensetzung näher beschrieben, gefolgt von dem Verfahren zur Herstellung der erfindungsgemäßen wässrigen Zusammensetzung, dem erfindungsgemäßen Kit-of-parts und dem erfindungsgemäßen wässrigen Beschichtungsmittel.

Die erfindungsgemäße wässrige Zusammensetzung enthält, jeweils bezogen auf das Gesamtgewicht der Zusammensetzung,
a. 3 bis 25 Gew.-% Bindemittel,
b. 5 bis 25 Gew.-% Vernetzungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 30 bis 70 Gew.-% Wasser.

Überraschend wurde gefunden, dass die Kombination von 3 bis 25 Gew.-% eines Bindemittels mit 5 bis 25 Gew.-% eines Vernetzungspolymers, 0,5 bis 10 Gew.-% Partikel mit einer mittleren Partikelgröße 1 bis 20 µm, und 0,01 bis 2 Gew.-% einer alkalischen Komponente in 30 bis 70 Gew.-% Wasser eine wässrige Zusammensetzung ergibt, die sich gut für einen Kit-of-parts mit einem Härter als weiterem Bestandteil eignet. Durch Zugabe des Härters zu der wässrigen Zusammensetzung kann ein wässriges Beschichtungsmittel erhalten werden, das einen angenehmen Softfeel-Effekt in Bezug auf das Griffempfinden zeigt und/oder als Lack im Innen- und/oder Außenbereich angewendet werden kann und/oder eine gute Haftung auf verschiedenen Oberflächen zeigt und/oder ein langes Zeitfenster zur Anwendung hat und/oder eine gute Widerstandsfähigkeit gegen mechanische und/oder chemische Einwirkungen aufweist und/oder bei dem vom Anwender keine gesundheitsschädlichen Stoffe gehandhabt werden müssen. Trotz des langen Zeitfensters zur Anwendung war es dennoch möglich, wässrige Beschichtungsmittel, insbesondere Lacke, zu erhalten, die nach dem Auftragen auf eine Oberfläche rasch aushärteten.

Ohne an eine wissenschaftliche Theorie gebunden sein zu wollen, scheint die Zugabe des Alkalistellers zur erfindungsgemäßen wässrigen Zusammensetzung dafür zu sorgen, dass nach Vermischen der erfindungsgemäßen wässrigen Zusammensetzung mit dem Härter der Härter im erfindungsgemäßen wässrigen Beschichtungsmittel stabilisiert wird. Dennoch scheint das Abdampfen zumindest einiger der Komponenten aus dem erfindungsgemäßen wässrigen Beschichtungsmittel nach dem Auftragen dafür zu sorgen, dass das wässrige Beschichtungsmittel gut aushärtet. Ferner scheinen durch den Härter chemische Vernetzungsreaktionen bei der Aushärtung abzulaufen, welche zu einer guten mechanischen und/oder chemischen Beständigkeit der Beschichtung führen. Schließlich kann es zur Herstellung des wässrigen Beschichtungsmittels genügen, die beiden Bestandteile des Kit-of-parts zu vermischen, ohne dass weitere Bestandteile hinzugefügt werden müssen.

Die mittlere Partikelgröße, insbesondere der Partikel mit einer Partikelgröße von 1 bis 20 µm, kann dabei insbesondere den D₅₀-Wert bezeichnen. Der D₅₀-Wert kann insbesondere die Größe bezeichnen, bei der 50 %, z.B. 50 Gew.-%, kleiner sind als die angegebene Größe. Beispielsweise würden dann 50 %, z.B. 50 Gew.-%, der Partikel eine theoretische Siebweite passieren. Methoden zur Bestimmung der mittleren Partikelgröße, insbesondere des D₅₀-Werts, sind dem Fachmann bekannt. Die mittlere Partikelgröße, insbesondere der D₅₀-Wert, kann beispielsweise durch Erstellung einer Partikelgrößenverteilung ermittelt werden. Die Messung kann zum Beispiel mittels Lichtstreuung, insbesondere mittels Laserdiffraktometrie oder Photonenkorrelationsspektroskopie, durchgeführt werden. Insbesondere kann die mittlere Partikelgröße, insbesondere der D₅₀-Wert, in einem flüssigen Medium, beispielsweise einem wässrigen Medium, gemessen werden. Die Messung kann insbesondere gemäß der ISO 13321, insbesondere der ISO13321:1996, und/oder der ISO 22412, insbesondere der ISO 22412:2008, durchgeführt werden. Beispielsweise kann zur Bestimmung der mittleren Partikelgröße, insbesondere des D₅₀-Werts, ein Malvern Mastersizer 2000 oder 3000 eingesetzt werden. Weitere Möglichkeiten zur Bestimmung der mittleren Partikelgröße, insbesondere des D₅₀-Werts, stellen Lichtund/oder Laserbeugung dar. Vorzugsweise wird ein Malvern Mastersizer 3000 zur Bestimmung der Partikelgrößenverteilung eingesetzt. Dabei kann vorteilhafterweise nach ISO 13320, insbesondere nach ISO 13320:2009, vorgegangen werden. Ferner kann die mittlere Partikelgröße, insbesondere der D₅₀-Wert, mit Hilfe einer Ultrazentrifuge oder mit chromatographischen Methoden, zum Beispiel der Capillary Hydrodynamic Fractionation (CHDF) bestimmt werden.

Die wässrige Zusammensetzung enthält 3 bis 25 Gew.-%, bevorzugt 5 bis 20 Gew.-%, weiter bevorzugt 8 bis 15 Gew.-%, besonders bevorzugt 10 bis 13 Gew.-%, Bindemittel, jeweils bezogen auf das Gesamtgewicht der Zusammensetzung.

Die Angaben bezüglich des Gehalts an Bindemittel in der wässrigen Zusammensetzung beziehen sich jeweils auf das Bindemittel als Feststoffanteil. Bevorzugt wird das Bindemittel bei der Herstellung einer wässrigen Zusammensetzung jedoch in Form einer Dispersion, insbesondere einer wässrigen Dispersion, zugegeben. Vorteilhafterweise enthalten diese Bindemitteldispersionen, insbesondere die wässrigen Bindemitteldispersionen, 25 bis 60 Gew.-%, bevorzugt 30 bis 50 Gew.-%, weiter bevorzugt 35 bis 40 Gew.-%, Bindemittel als Feststoffgehalt. Entsprechend kann das Bindemittel der erfindungsgemäßen wässrigen Zusammensetzung in Form einer wässrigen Dispersion mit einem Feststoffgehalt von 25 bis 60 Gew.-%, insbesondere 30 bis 50 Gew.-% oder 35 bis 40 Gew.-%, vorliegen. Wird das Bindemittel als wässrige Bindemitteldispersion zugegeben, wird das Wasser der Bindemitteldispersion als Teil des gesamten Wassergehalts der wässrigen Zusammensetzung gerechnet. Liegt das Bindemittel beispielsweise als 50%ige Dispersion in Wasser vor, so enthält die wässrige Zusammensetzung entsprechend 6 bis 50 Gew.-% der Bindemitteldispersion und entsprechend weniger Wasser, insbesondere 27 bis 45 Gew.-% Wasser, jeweils bezogen auf das Gesamtgewicht der wässrigen Zusammensetzung. Wässrige Zusammensetzungen enthaltend Bindemittel in diesen Mengen haben gute Verarbeitungseigenschaften, insbesondere eine gute Mischbarkeit, gezeigt.

Als Bindemittel kann ein Bindemittel eingesetzt werden oder es können mehrere Bindemittel eingesetzt werden. Werden mehrere Bindemittel eingesetzt, können diese als Feststoff oder als Bindemitteldispersionen zugegeben werden. Werden sie als Bindemitteldispersionen zugegeben, können diese den gleichen oder einen unterschiedlichen Feststoffgehalt aufweisen. Bevorzugt liegt das Bindemittel der erfindungsgemäßen wässrigen Zusammensetzung als Mischung zweier wässriger Bindemitteldispersionen je mit einem Feststoffgehalt von 25 bis 60 Gew.-%, insbesondere 30 bis 50 Gew.-% oder 35 bis 40 Gew.-%, vor. Dabei können die wässrigen Bindemitteldispersionen denselben oder einen unterschiedlichen, bevorzugt einen unterschiedlichen Feststoffgehalt aufweisen. Bevorzugt weist eine der Bindemitteldispersionen einen Feststoffgehalt von 35 Gew.-% und die andere einen Feststoffgehalt von 40 Gew.-% auf. Weiter bevorzugt werden die beiden Bindemitteldispersionen in einem Gewichtsverhältnis (Bindemitteldispersion mit einem Feststoffgehalt von 35 Gew.-%) zu (Bindemitteldispersion mit einem Feststoffgehalt von 40 Gew.-%) von 1,3 bis 1,9, insbesondere 1,4 bis 1,8 oder 1,5 bis 1,7, eingesetzt.

Vorteilhafterweise ist das Bindemittel der erfindungsgemäßen wässrigen Zusammensetzung ein Polymer. Das Polymer kann ein Homopolymer oder ein Copolymer sein, wobei für Copolymere verschiedene Architekturen wie statistische Copolymere, Gradientcopolymere, alternierende Copolymere, Block- oder Segmentcopolymere und Pfropfcopolymere denkbar sind. Insbesondere ist das Polymer ausgewählt aus der Gruppe bestehend aus Polyurethane, Polyester-Polyurethane, anionische Polyesterpolyurethane, aliphatische anionische Polyesterpolyurethane, Polycarbonatesterpolyurethane, Polyetherpolyole, Polyacrylatdispersionen, Alkydemulsionen, sowie deren hydroxyfunktionelle Polymere und Mischungen davon. Mischungen der vorgenannten Polymere können insbesondere dadurch erreicht werden, dass mehr als eine, insbesondere zwei, Bindemitteldispersionen mit verschiedenen Polymeren eingesetzt werden. Besonders bevorzugt werden als Bindemittel eine wässrige Polyurethandispersion, insbesondere mit einem Feststoffgehalt von 35 Gew.-%, und eine wässrige anionische Polyesterpolyurethandispersion, insbesondere mit einem Feststoffgehalt von 40 Gew.-%, eingesetzt. Es hat sich herausgestellt, dass wässrige Beschichtungsmittel, die derartige Bindemittel enthalten, eine gute Haftung auf verschiedenen Oberflächen, insbesondere auf Metall, Holz, Kunststoffen, sowie Altbeschichtungen und auf geeigneten Grundierungen, zeigen können. Ferner weisen Lacke, die derartige Bindemittel enthalten, ein angenehmes Griff-Empfinden auf.

Die wässrige Zusammensetzung enthält ferner 5 bis 25 Gew.-%, bevorzugt 8 bis 22 Gew.-%, weiter bevorzugt 10 bis 20 Gew.-%, besonders bevorzugt 13 bis 17 Gew.-%, Vernetzungspolymer, jeweils bezogen auf das Gesamtgewicht der Zusammensetzung. Derartige Mengen des Vernetzungspolymers haben sich für eine gute Vernetzung des wässrigen Beschichtungsmittels und damit für eine gute Widerstandsfähigkeit des getrockneten Lacks als vorteilhaft erwiesen.

Das Vernetzungspolymer hat insbesondere die Funktion, mindestens eine funktionelle Gruppe bereitzustellen, mit dem der Härter des wässrigen Beschichtungsmittels, der im Kit-of-parts vorzugsweise separat gelagert wird, eine chemische Reaktion eingeht, so dass eine chemische Vernetzung bewirkt wird. Bevorzugt ist die mindestens eine funktionelle Gruppe des Vernetzungspolymers so gewählt, dass in der wässrigen Zusammensetzung, die den Härter des wässrigen Beschichtungsmittels nicht enthält, keine chemische Vernetzung abläuft.

Vorteilhafterweise weist das Vernetzungspolymer mindestens eine Carboxylgruppe und/oder mindestens eine Hydroxylgruppe und/oder mindestens eine Aminogruppe, bevorzugt mindestens eine Carboxylgruppe, auf. Ferner weist das Vernetzungspolymer vorteilhafterweise eine Säurezahl von 1 bis 20 mg KOH/g auf. Die Säurezahl kann insbesondere auf die Lieferform des Vernetzungspolymers berechnet sein. Die Säurezahl kann insbesondere nach DIN EN ISO 2114, insbesondere nach DIN EN ISO 2114:2002-06, bestimmt werden. Weiter bevorzugt ist das Vernetzungspolymer ausgewählt aus der Gruppe bestehend aus anionische Polyurethane, aliphatische anionische Polyurethane, acrylsäurehaltige Polymere, Polyurethan-Acrylatemulsionen, Polyurethan-Alkydemulsionen, Polyurethane, Polyester-Polyurethane, anionische Polyesterpolyurethane, aliphatische anionische Polyesterpolyurethane, Polycarbonatesterpolyurethane, Polyetherpolyole, Polyacrylatdispersionen, Alkydemulsionen, sowie deren hydroxyfunktionelle Polymere und Mischungen davon. Besonders bevorzugt ist das Vernetzungspolymer ein aliphatisches anionisches Polyurethan.

Die Angaben bezüglich des Gehalts an Vernetzungspolymer in der wässrigen Zusammensetzung beziehen sich jeweils auf das Vernetzungspolymer als Feststoffanteil. Bevorzugt wird das Vernetzungspolymer jedoch in Form einer Dispersion, insbesondere einer wässrigen Dispersion zugegeben. Vorteilhafterweise enthalten diese Vernetzungspolymerdispersionen, insbesondere die wässrigen Vernetzungspolymerdispersionen, 25 bis 60 Gew.-%, bevorzugt 30 bis 50 Gew.-%, weiter bevorzugt 35 bis 45 Gew.-% oder 40 Gew.-%, Vernetzungspolymer als Feststoffgehalt. Entsprechend kann das Vernetzungspolymer der erfindungsgemäßen wässrigen Zusammensetzung in Form einer wässrigen Dispersion mit einem Feststoffgehalt von 25 bis 60 Gew.-%, insbesondere 30 bis 50 Gew.-% oder 35 bis 45 Gew.-% oder 40 Gew.-%, vorliegen. Wird das Vernetzungspolymer als wässrige Vernetzungspolymerdispersion zugegeben, wird das Wasser der Vernetzungspolymerpolymerdispersion als Teil des gesamten Wassergehalts der wässrigen Zusammensetzung gerechnet. Liegt das Vernetzungspolymer beispielsweise als 50%ige Dispersion in Wasser vor, so enthält die wässrige Zusammensetzung entsprechend 10 bis 50 Gew.-% der Bindemitteldispersion und entsprechend weniger Wasser, insbesondere 25 bis 45 Gew.-% Wasser, jeweils bezogen auf das Gesamtgewicht der wässrigen Zusammensetzung. Wässrige Zusammensetzungen enthaltend Vernetzungspolymer in diesen Mengen haben gute Verarbeitungseigenschaften, insbesondere eine gute Mischbarkeit, gezeigt.

Die wässrige Zusammensetzung enthält ferner 0,5 bis 10 Gew.-%, bevorzugt 1 bis 8 Gew.-%, weiter bevorzugt 2 bis 7 Gew.-% oder 3 bis 6 Gew.-%, Partikel mit einer mittleren Partikelgröße von 1 bis 20 µm, jeweils bezogen auf das Gesamtgewicht der Zusammensetzung.

Bevorzugt weisen die Partikel mit einer mittleren Partikelgröße von 1 bis 20 µm eine mittlere Partikelgröße von 2 bis 17 µm, weiter bevorzugt von 3 bis 15 µm, besonders bevorzugt von 4 bis 13 µm oder von 6 bis 10 µm auf. Für die mittlere Partikelgröße und deren Bestimmung gilt das voranstehend Gesagte. Vorteilhafterweise sind die Partikel mit den voranstehend aufgeführten Größen ausgewählt aus der Gruppe bestehend aus Polyurethanpartikel, Polymethylmethacrylatpartikel, Polymethylharnstoffpartikel, Silikatacrylharz-Polymerpartikel, polymere Mikrohohlkugeln, Cellulosefasern, Textilfasern, Korkmehl und Mischungen davon. Besonders bevorzugt handelt es sich um Silikatacrylharz-Polymerpartikel. Derartige Partikel lassen sich gut in die wässrige Zusammensetzung sowie in das wässrige Beschichtungsmittel integrieren und zeigen auch im trockenen Film wenig Entmischungseffekte.

Weiterhin enthält die wässrige Zusammensetzung 0,01 bis 2 Gew.-%, bevorzugt 0,01 bis 1 Gew.-%, weiter bevorzugt 0,01 bis 0,05 Gew.-%, einer alkalischen Komponente, jeweils bezogen auf das Gesamtgewicht der Zusammensetzung. Zweckmäßigerweise ist die alkalische Komponente ausgewählt aus der Gruppe bestehend aus Kaliumhydroxid, Natriumhydroxid, Calciumhydroxid, Ammoniak, Triethylamin, Dimethylaminoethanol, Aminomethylpropanol, Dimethylglucamin und Mischungen davon. Bevorzugt ist die alkalische Komponente im Reinzustand ein wasserlösliches Gas, insbesondere Ammoniak. Bevorzugt liegt die alkalische Komponente in Form einer wässrigen Lösung vor. Weiter bevorzugt liegt die alkalische Komponente als Salmiakgeist vor. Liegt die alkalische Komponente als wässrige Lösung, insbesondere als Salmiakgeist, vor enthält die die wässrige Zusammensetzung bevorzugt 0,01 bis 2 Gew.-%, weiter bevorzugt 0,01 bis 1 Gew.-%, der alkalischen Komponente. Dabei gilt für den Wassergehalt der wässrigen Zusammensetzung das oben zu den Bindemittel- und Vernetzungspolymerdispersionen Gesagte entsprechend. Es hat sich herausgestellt, das mit den voranstehend genannten alkalischen Komponenten im wässrigen Beschichtungsmittel eine gute Stabilisierung des Mittels, das in der Lage ist mit Carboxylgruppen einen Aktivester zu bilden, erreicht werden kann. Trotzdem kann mit diesen alkalischen Komponenten, insbesondere mit Ammoniak, dabei insbesondere in Form von Salmiakgeist, eine rasche Härtung nach dem Auftragen des wässrigen Beschichtungsmittels erreicht werden.

Erfindungsgemäße wässrige Zusammensetzungen enthaltend eine Kombination aus den vorgenannten Bestandteilen haben vorteilhafte Eigenschaften. Insbesondere können erfindungsgemäße wässrige Zusammensetzungen Bestandteil in Kit-of-parts zusammen mit einem Härter als weiteren Bestandteil sein, mit denen durch einfaches Vermischen der Bestandteile erfindungsgemäße wässrige Beschichtungsmittel hergestellt werden können, die Anwendern als 1K-Lacke mit einem Zeitfenster bis zur Aushärtung im Gebinde von bis zu zwei Monaten übergeben werden können. Mit derartigen Lacken erstellte Beschichtungen weisen ein angenehmes Griffempfinden auf. Ferner haften sie sehr gut auf diversen Untergründen und/oder lassen sich sehr gut als Lack im Innen-und/oder Außenbereich anwenden. Derartige Lacke verfügen auch über eine gute Widerstandsfähigkeit nach der Aushärtung. Diese Effekte wurden insbesondere mit wässrigen Zusammensetzungen erzielt, bei denen das Bindemittel in Form von zwei Bindemitteldispersionen, insbesondere einer wässrigen Polyurethandispersion und einer anionischen aliphatischen Polyesterpolyurethandispersion, vorlag, das Vernetzungspolymer als wässrige aliphatische anionische Polyurethandispersion vorlag, die Partikel eine mittlere Partikelgröße von 6 bis 10 µm aufwiesen und insbesondere Silikatacrylharz-Polymerpartikel waren und die alkalische Komponente im Reinzustand ein wasserlösliches Gas war, insbesondere die alkalische Komponente in Form von Salmiakgeist vorlag.

Zweckmäßigerweise kann die erfindungsgemäße wässrige Zusammensetzung zusätzlich 0,1 bis 5 Gew.-%, insbesondere 0,1 bis 3 Gew.-% oder 0,5 bis 1,5 Gew.-%, Mattierungsmittel enthalten, jeweils bezogen auf das Gesamtgewicht der Zusammensetzung. Die Einbindung eines Mattierungsmittels hilft dabei, insbesondere den gewünschten optischen Eindruck beim gehärteten Lack zu erzeugen. Das Mattierungsmittel kann aber auch dabei unterstützen, das gewünschte Griffempfinden für den gehärteten Lack zu erzeugen.

Als Mattierungsmittel werden insbesondere Additive für Beschichtungsstoffe, insbesondere Lacke, bezeichnet, die die Oberfläche der Beschichtung so beeinflussen, dass deren Glanzgrad, insbesondere der Reflektometerwert, sinkt.

Als Mattierungsmittel kommen die verschiedensten Substanzen in Frage. Bevorzugt ist das Mattierungsmittel ausgewählt aus der Gruppe bestehend aus Kieselsäure, pyrogene Kieselsäure, Polymethylharnstoff, keramische Mikrokugeln, Diatomeenerde, Quarzmehle, Talkum und Wachsadditive wie Polyethylenwachse. Bevorzugt wird Kieselsäure als Mattierungsmittel eingesetzt. Diese Mattierungsmittel haben sich als geeignet erwiesen, um die voranstehend beschriebenen Effekte zu erzeugen.

Bevorzugt weisen die Partikel des Mattierungsmittels eine mittlere Partikelgröße, insbesondere einen D₅₀-Wert, von 1 bis 20 µm, bevorzugt von 5 bis 15 µm, weiter bevorzugt von 7 bis 13 µm, weiter bevorzugt von 8 bis 12 µm, besonders bevorzugt von 9 bis 11 µm, auf. Für die mittlere Partikelgröße, insbesondere den D₅₀-Wert, des Mattierungsmittels und deren Bestimmung gilt das voranstehend Gesagte.

Weiterhin kann die erfindungsgemäße wässrige Zusammensetzung vorteilhafterweise weitere Teilchen enthalten. Insbesondere kann die wässrige Zusammensetzung zusätzlich 0,1 bis 5 Gew.-%, bevorzugt 0,1 bis 3 Gew.-%, weiter bevorzugt 0,5 bis 2 Gew.-%, jeweils bezogen auf das Gesamtgewicht der Zusammensetzung, Teilchen mit einer Größe von 1 bis 50 µm, bevorzugt von 1 bis 40 µm, weiter bevorzugt von 1 bis 30 µm, weiter bevorzugt von 1 bis 20 µm, weiter bevorzugt von 1 bis 15 µm, weiter bevorzugt von 1 bis 10 µm, besonders bevorzugt von 6 µm, enthalten. Bei der Größe dieser Teilchen handelt es sich insbesondere um den D₉₀-Wert. Der D₉₀-Wert kann insbesondere die Größe bezeichnen, bei der 90 %, z.B. 90 Gew.-%, kleiner sind als die angegebene Größe. Beispielsweise würden dann 90 %, z.B. 90 Gew.-%, der Teilchen eine theoretische Siebweite passieren. Für die dem Fachmann bekannten Methoden zur Ermittlung des D₉₀-Werts gilt das zum D₅₀-Wert Gesagte entsprechend. Vorteilhafterweise sind die zusätzlichen Teilchen ausgewählt aus der Gruppe bestehend aus Polyurethanpartikel, Polymethylmethacrylat-Partikel, Polymethylharnstoffpartikel, Silikatacrylharz-Polymerpartikel, polymere Mikrohohlkugeln, Cellulosefasern, Textilfasern, Korkmehl und Mischungen davon. Bevorzugt handelt es sich bei diesen zusätzlichen Teilchen um Polymethylmethacrylat-Partikel, insbesondere um vernetzte Polymethylmethacrylat-Partikel. Diese können insbesondere einen Brechungsindex von 1,47 bis 1,51, bevorzugt von 1,48 bis 1,50, weiter bevorzugt von 1,487 bis 1,492, aufweisen. Die Zugabe von Teilchen mit derartigen Teilchengrößen kann das Griffempfinden von Oberflächen, die mit dem erfindungsgemäßen wässrigen Beschichtungsmittel behandelt wurden, verbessen.

Ferner kann die wässrige Zusammensetzung zusätzlich mindestens ein Pigment enthalten. Insbesondere kann das wässrige Beschichtungsmittel zusätzlich 0,1 bis 10 Gew.-%, bevorzugt 0,1 bis 5 Gew.-%, weiter bevorzugt 0,5 bis 3 Gew.-%, mindestens ein Pigment enthalten, jeweils bezogen auf das Gesamtgewicht der Zusammensetzung.

Als Pigmente können ebenfalls verschiedene Substanzen eingesetzt werden. Beispielsweise können nur anorganische oder nur organische Pigmente oder Mischungen von anorganischen und organischen Pigmenten eingesetzt werden.

Bevorzugt ist das Pigment ausgewählt aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon.

Als anorganische Pigmente können beispielsweise Oxide wie Titandioxid, Eisenoxide, z.B. P.Y. 42, P.R. 101, P.Bk. 11, Chromoxidgrün, z.B. P.G. 17, Mischphasenpigmente z.B. Cobaltoxide Blau P.B. 28 und Grün P.G. 50, Bismutvanadat P.Y. 184, Rutil-Zinn-Zink P.O. 216, Silikate, z.B. Ultramarinblau P.B. 29 und Kohlenstoff, z.B. Ruß P.Bk. 7 verwendet werden.

Als organische Pigmente können zum Beispiel Azopigmente, z.B. Arylidgelb (Monoazo) P.Y. 74, Polycyclische Pigmente, z.B. Chinacridone P.R. 122, Perinone P.O. 43, Pyrazolo-Chinazolon P.O. 67, Diketo-Pyrrolo-Pyrrol (DPP) P.R. 254, Dioxazine P.V. 23 und Metallkomplexpigmente, z.B. Kupferphthalocyanine Blau P.B. 15:3 und Grün P.G. 7 eingesetzt werden.

Die für die Beispiele verwendeten Bezeichnungen der anorganischen und organischen Pigmente entsprechen den Generic Names des Colour Index der British Society of Dyers and Colourists.

Durch die Verwendung von Pigmenten in der wässrigen Zusammensetzung können farbige wässrige Beschichtungsmittel hergestellt werden, die im Wesentlichen das ganze Farbspektrum abdecken. Damit können insbesondere Buntlacke hergestellt werden.

Die wässrigen Zusammensetzungen können jedoch auch frei von Pigment und somit farblos sein. Mit derartigen wässrigen Zusammensetzungen können farblose wässrige Beschichtungsmittel hergestellt werden, die sich insbesondere als Klarlacke eignen. Bevorzugt enthält die erfindungsgemäße wässrige Zusammensetzung kein Pigment.

Zusätzlich kann die erfindungsgemäße wässrige Zusammensetzung auch noch weitere übliche Zusätze und/oder Additive enthalten. Insbesondere kann die wässrige Zusammensetzung zusätzlich ein oder mehrere weitere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthalten.

Die Zusätze und/oder Additive können in Reinform und/oder als Mischungen, insbesondere mit Wasser, vorliegen.

Zusätze und/oder Additive können insgesamt in einer Menge von 0,1 bis 30 Gew.-%, bevorzugt 0,5 bis 20 Gew.-%, weiter bevorzugt 1 bis 10 Gew.-%, jeweils bezogen auf das Gesamtgewicht der wässrigen Zusammensetzung, enthalten sein.

Beispiele für Verdicker sind Alkoholalkoxylate, Ethylenoxid-Propylenoxid-Copolymere, Maleinsäureanhydrid-Diisobutylen-Copolymere, Polyacryl- und Polymethacrylsäure und deren Salze, Methylcellulosen, Carboxymethylcellulosen, Hydroxymethylcellulosen, Polyurethane, Alkalimetallphosphate und Salze modifizierter Phosphorsäuren, sowie deren Mischungen.

Beispiele für Entschäumer sind Polyglykole, Triglyceride, Polysiloxan-Polyether-Copolymere und Silikonöle.

Beispiele für Hydrophobiermittel sind insbesondere oligomere und polymere Siloxane und Silikonharze.

Beispiele für Konservierungsmittel sind Isothiazoline.

Beispiele für Netzmittel sind Polysiloxane und Acrylcopolymere.

Beispiele für Lösungsmittel sind ein- oder mehrwertige Alkohole.

Beispiele für Substratbenetzungsmittel sind Tenside.

Die Erfindung stellt ferner ein Verfahren zur Herstellung der erfindungsgemäßen wässrigen Zusammensetzung bereit, welches die folgenden Schritte umfasst:
a. Bereitstellen einer Zusammensetzung enthaltend, jeweils bezogen auf das Gesamtgewicht der Zusammensetzung,
   i. 3 bis 25 Gew.-% Bindemittel,
   ii. 5 bis 25 Gew.-% Vernetzungspolymer,
   iii. 0,5 bis 10 Gew.-% Partikel mit einer mittleren Partikelgröße von 1 bis 20 µm,
   iv. 0,01 bis 2 Gew.-% einer alkalischen Komponente,
   v. 30 bis 70 Gew.-% Wasser,
b. Dispergieren der in a. genannten Komponenten.

Die angeführten Schritte können in beliebiger Reihenfolge durchgeführt werden, vorzugsweise werden sie in der angegebenen Reihenfolge durchgeführt.

Zum Dispergieren der Bestandteile können dem Fachmann bekannte Vorrichtungen verwendet werden. Beispielsweise können Turbomills, Perlmühlen oder Dissolver, bevorzugt Dissolver, hierfür verwendet werden.

Das im Zusammenhang mit der erfindungsgemäßen wässrigen Zusammensetzung zum Bindemittel Gesagte gilt gleichermaßen auch für das Bindemittel des erfindungsgemäßen Verfahrens.

Das im Zusammenhang mit der erfindungsgemäßen wässrigen Zusammensetzung zum Vernetzungspolymer Gesagte gilt gleichermaßen auch für das Vernetzungspolymer des erfindungsgemäßen Verfahrens.

Das im Zusammenhang mit der erfindungsgemäßen wässrigen Zusammensetzung zu den Partikeln mit einer mittleren Partikelgröße von 1 bis 20 µm Gesagte gilt gleichermaßen auch für die Partikel mit einer mittleren Partikelgröße von 1 bis 20 µm des erfindungsgemäßen Verfahrens.

Das im Zusammenhang mit der erfindungsgemäßen wässrigen Zusammensetzung zur alkalischen Komponente Gesagte gilt gleichermaßen auch für die alkalische Komponente des erfindungsgemäßen Verfahrens.

Insbesondere kann die Zusammensetzung des erfindungsgemäßen Verfahrens 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Vernetzungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-% der alkalische Komponente und/oder zusätzlich 0,1 bis 5 Gew.-%, insbesondere 0,1 bis 3 Gew.-% oder 0,5 bis 1,5 Gew.-%, Mattierungsmittel enthalten, jeweils bezogen auf das Gesamtgewicht der Zusammensetzung.

Ferner kann die Zusammensetzung des erfindungsgemäßen Verfahrens auch zusätzlich 0,1 bis 5 Gew.-%, bevorzugt 0,1 bis 3 Gew.-%, weiter bevorzugt 0,5 bis 2 Gew.-%, jeweils bezogen auf das Gesamtgewicht der Zusammensetzung, Teilchen mit einer Größe von 1 bis 50 µm, bevorzugt von 1 bis 10 µm, und/oder mindestens ein Pigment, insbesondere 0,1 bis 10 Gew.-%, bevorzugt 0,1 bis 5 Gew.-%, weiter bevorzugt 0,5 bis 3 Gew.-%, jeweils bezogen auf das Gesamtgewicht der Zusammensetzung, mindestens ein Pigment und/oder 0,1 bis 30 Gew.-%, bevorzugt 0,5 bis 20 Gew.-%, weiter bevorzugt 1 bis 10 Gew.-%, besonders bevorzugt 1,5 bis 5 Gew.-%, jeweils bezogen auf das Gesamtgewicht der Zusammensetzung, Zusätze und/oder Additive wie zum Beispiel Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthalten.

Bevorzugt enthält die Zusammensetzung des erfindungsgemäßen Verfahrens kein Pigment.

Das im Zusammenhang mit der wässrigen Zusammensetzung zum Mattierungsmittel, dem mindestens einen Pigment, den Teilchen mit einer Größe von 1 bis 50 µm und den weiteren Zusätzen und/oder Additiven Gesagte gilt gleichermaßen auch für das Mattierungsmittel, das Pigment, die Teilchen und/oder die Zusätze und/oder Additive der Zusammensetzung des erfindungsgemäßen Verfahrens.

Gegenstand der Erfindung ist ferner eine wässrige Zusammensetzung, die durch das erfindungsgemäße Verfahren erhältlich ist.

Gegenstand der Erfindung ist weiterhin ein Kit-of-parts umfassend eine erfindungsgemäße wässrige Zusammensetzung sowie einen Härter.

In erfindungsgemäßen Kit-of-parts können die wässrige Zusammensetzung und der Härter in voneinander getrennten Gebinden aufbewahrt werden. Durch die Trennung der Gebinde kann in erfindungsgemäßen Kit-of-parts eine lange Aufbewahrungszeit erreicht werden. Dennoch kann aus den Kit-of-parts durch einfaches Vermischen, insbesondere mittels einer Farbmischmaschine oder manueller Vermischung ein erfindungsgemäßes wässriges Beschichtungsmittel erhalten werden, das Anwendern direkt gegeben werden kann, aber dennoch eine Aufbewahrungszeit von bis zu zwei Monaten aufweist.

Vorteilhafterweise weist der Härter funktionelle Gruppen auf, die mit dem Vernetzungspolymer, insbesondere mit den funktionellen Gruppen des Vernetzungspolymers, eine chemische Reaktion eingehen können, so dass eine chemische Vernetzung bewirkt wird. Bevorzugt ist der Härter kein Katalysator.

Bevorzugt ist der Härter ein Mittel, das in der Lage ist mit Carboxylgruppen einen Aktivester zu bilden. Bevorzugt ist der Härter ein Carbodiimid, weiter bevorzugt ein polymeres Carbodiimid. Geeignete Carbodiimide können insbesondere funktionelle Carbodiimidgruppen (N=C=N) aufweisen. Carbodiimide können insbesondere organische Verbindungen mit kumulierten Doppelbindungen der allgemeinen Strukturformel R-N=C=N-R sein, wobei jeder Rest R unabhängig voneinander ausgewählt sein kann aus der Gruppe bestehend aus H, optional substituierter Kohlenwasserstoffrest mit 1 bis 20 Kohlenstoffatomen, optional substituiertes C1-C10-Alkyl, Acyl, Aoryl, Imidoyl, Sulfonyl, Stickstoff, Silicium und metallsubstituierte Reste, insbesondere aus der Gruppe bestehend aus H, optional substituierter Kohlenwasserstoffrest mit 1 bis 20 Kohlenstoffatomen, optional substituiertes C1-C10-Alkyl, Acyl, Aoryl, Imidoyl und Sulfonyl. Kohlenwasserstoffreste und Alkylgruppen können insbesondere auch Heteroatome, bevorzugt ausgewählt aus Stickstoff, Sauerstoff und Schwefel, enthalten und/oder mit C1-C3 Alkylgruppen, Hydroxylgruppen, Aminogruppen und/oder Dimethylaminogruppen substituiert sein. Beispiele für Carbodiimide sind Dicyclohexylcarbodiimid, Diisopropylcarbodiimid, 1-Ethyl-3-(3-dimethylaminopropyl)carbodiimid.

Polymeres Carbodiimid weist bevorzugt mindestens eine, insbesondere zwei oder mehr funktionelle Carbodiimidgruppen (N=C=N) auf. Diese können im Rückgrat des Polymers oder als Seitenketten vorhanden sein. Polymeres Carbodiimid ist ferner vorteilhafterweise nicht-ionisch. Polymeres Carbodiimid weist bevorzugt ein Carbodiimid-Äquivalentengewicht von 200 bis 800 g/mol, weiter bevorzugt von 200 bis 700 g/mol, weiter bevorzugt von 200 bis 600 g/mol, besonders bevorzugt von 300 bis 500 g/mol, auf. Polymeres Carbodiimid liegt bevorzugt als Dispersion in Wasser oder geeigneten Lösemittelgemischen vor, insbesondere mit einem Feststoffgehalt von 20 bis 100 Gew.-%, bevorzugt 20 bis 90 Gew.-%, weiter bevorzugt 20 bis 80 Gew.-%, weiter bevorzugt 20 bis 70 Gew.-%, weiter bevorzugt 20 bis 60 Gew.-%, weiter bevorzugt 30 bis 50 Gew.-%, besonders bevorzugt 40 Gew.-%.

Die Carbodiimidgruppe kann dabei insbesondere die funktionelle Gruppe sein, die mit dem Vernetzungspolymer eine chemische Reaktion eingehen kann.

Mit dem erfindungsgemäßen Kit-of-parts können erfindungsgemäße wässrige Beschichtungsmittel durch Vermischen der Bestandteile des Kit-of-parts erhalten werden. Bevorzugt wird dabei das Verhältnis von erfindungsgemäßer wässriger Zusammensetzung und Härter so gewählt, dass pro Mol funktioneller Gruppe, insbesondere pro Mol Carboxylgruppe, des Vernetzungspolymers zwei Mol an funktionellen Gruppen des Härters, insbesondere zwei Mol an Carbodiimid-Gruppen, vorhanden sind.

Dementsprechend stellt die Erfindung ein wässriges Beschichtungsmittel bereit enthaltend, jeweils bezogen auf das Gesamtgewicht des Beschichtungsmittels,
a. 3 bis 25 Gew.-% Bindemittel,
b. 5 bis 25 Gew.-% Verneztungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 0,5 bis 5 Gew.-% Härter,
f. 30 bis 70 Gew.-% Wasser.

Das wässrige Beschichtungsmittel weist bevorzugt einen pH-Wert von 8 bis 10,5, insbesondere von 9 bis 10 auf. Bei diesem pH-Wert weist das wässrige Beschichtungsmittel eine hohe Lagerstabilität auf.

Das im Zusammenhang mit der erfindungsgemäßen wässrigen Zusammensetzung zum Bindemittel Gesagte gilt gleichermaßen auch für das Bindemittel des erfindungsgemäßen wässrigen Beschichtungsmittels.

Das im Zusammenhang mit der erfindungsgemäßen wässrigen Zusammensetzung zum Vernetzungspolymer Gesagte gilt gleichermaßen auch für das Verneztungspolymer des erfindungsgemäßen wässrigen Beschichtungsmittels.

Das im Zusammenhang mit der erfindungsgemäßen wässrigen Zusammensetzung zu den Partikeln mit einer mittleren Partikelgröße von 1 bis 20 µm Gesagte gilt gleichermaßen auch für die Partikel mit einer mittleren Partikelgröße von 1 bis 20 µm des erfindungsgemäßen wässrigen Beschichtungsmittels.

Das im Zusammenhang mit der erfindungsgemäßen wässrigen Zusammensetzung zur alkalischen Komponente Gesagte gilt gleichermaßen auch für die alkalische Komponente des erfindungsgemäßen wässrigen Beschichtungsmittels.

Insbesondere kann das erfindungsgemäße wässrige Beschichtungsmittel 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Verneztungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-% der alkalischen Komponente und/oder 0,5 bis 4 Gew.-%, insbesondere 1 bis 2 Gew.-% Härter und/oder zusätzlich 0,1 bis 5 Gew.-%, insbesondere 0,1 bis 3 Gew.-% oder 0,5 bis 1,5 Gew.-%, Mattierungsmittel enthalten, jeweils bezogen auf das Gesamtgewicht des Beschichtungsmittels.

Ferner kann das erfindungsgemäße wässrige Beschichtungsmittel auch zusätzlich 0,1 bis 5 Gew.-%, bevorzugt 0,1 bis 3 Gew.-%, weiter bevorzugt 0,5 bis 2 Gew.-%, jeweils bezogen auf das Gesamtgewicht des Beschichtungsmittels, Teilchen mit einer Größe von 1 bis 50 µm, bevorzugt von 1 bis 10 µm, und/oder mindestens ein Pigment, insbesondere 0,1 bis 10 Gew.-%, bevorzugt 0,1 bis 5 Gew.-%, weiter bevorzugt 0,5 bis 3 Gew.-%, jeweils bezogen auf das Gesamtgewicht des Beschichtungsmittels, mindestens ein Pigment und/oder 0,1 bis 30 Gew.-%, bevorzugt 0,5 bis 20 Gew.-%, weiter bevorzugt 1 bis 10 Gew.-%, besonders bevorzugt 1,5 bis 5 Gew.-%, jeweils bezogen auf das Gesamtgewicht des Beschichtungsmittels, Zusätze und/oder Additive wie zum Beispiel Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthalten.

Bevorzugt enthält das erfindungsgemäße wässrige Beschichtungsmittel kein Pigment.

Das im Zusammenhang mit der wässrigen Zusammensetzung zum Mattierungsmittel, dem mindestens einen Pigment, den Teilchen mit einer Größe von 1 bis 50 µm und den weiteren Zusätzen und/oder Additiven Gesagte gilt gleichermaßen auch für das Mattierungsmittel, das Pigment, die Teilchen und/oder die Zusätze und/oder Additive des wässrigen Beschichtungsmittels.

Das im Zusammenhang mit dem Kit-of-parts zum Härter Gesagte gilt gleichermaßen auch für den Härter des erfindungsgemäßen wässrigen Beschichtungsmittels.

Das wässrige Beschichtungsmittel ist für verschiedene Verwendungen geeignet. Insbesondere eignet es sich als Lack, insbesondere als Einkomponenten-Lack. Dementsprechend ist die Verwendung des erfindungsgemäßen wässrigen Beschichtungsmittels als Lack, insbesondere für den Innen- und/oder Außenbereich, ebenfalls Gegenstand der Erfindung.

Die Erfindung wird im Folgenden durch Beispiele näher erläutert, die jedoch nur der Veranschaulichung dienen und nicht limitierend sind.

### BEISPIEL

Eine wässrige Zusammensetzung A mit der folgenden, in Tabelle 1 wiedergegebenen Formulierung wurde hergestellt durch Mischen der in Tabelle 1 angegebenen Bestandteile, dosierte Angaben jeweils in Gew.-%.

**Tabelle 1: Rezeptur der wässrigen Zusammensetzung A**

| **Bestandteil** | **Menge (Gew.-%)** |
|---|---|
| Polyurethandispersion für Softfeel Effekte, als 35%ige wässrige Dispersion | 20 |
| Aliphatische anionische Polyurethandispersion, als 40%ige wässrige Dispersion | 37 |
| Anionische aliphatische Polyesterpolyurethandispersion, als 40%ige wässrige Dispersion | 13 |
| Entschäumer, 20%ig in Wasser | 2 |
| Netzmittel | 1 |
| Mattierungsmittel | 0,7 |
| Partikel mit einer mittleren Partikelgröße von 6 bis 10 µm | 4 |
| Teilchen mit einer Partikelgröße D₉₀ von 6 µm | 1 |
| Verdicker, 25%ig in Wasser | 3 |
| Lösungsmittel | 7 |
| Dispergiermittel | 1,5 |
| Alkalische Komponente, 15%ig in Wasser | 0,2 |
| Wasser | 9,6 |

Eine Zusammensetzung mit der in Tabelle 1 angegebenen Rezeptur wurde mit Hilfe eines Dissolvers dispergiert, wodurch die wässrige Zusammensetzung **A** erhalten wurde.

Die wässrige Zusammensetzung **A** wurde in Verbindung mit einem polymeren Carbodiimid, das als 40 Gew.-%ige wässrige Dispersion vorlag, wobei das CarbodiimidÄquivalentgewicht 393 g/mol betrug, als Härter als Kit-of-parts bereitgestellt.

Durch manuelles Vermischen von 19 Gewichtsteilen der wässrigen Zusammensetzung **A** mit 1 Gewichtsteil des polymeren Carbodiimid wurde ein wässriges Beschichtungsmittel erhalten, das als Lack als 1K-System an Anwender abgegeben werden konnte. Dieser Lack konnte zwei Monate lang in einem Gebinde aufbewahrt werden, ohne auszuhärten. Dieser Lack wurde im Innen- und Außenbereich auf Metall, Holz, Kunststoffen, sowie Altbeschichtungen und auf geeigneten Grundierungen verwendet. Der Lack haftete gut an den Oberflächen, härtete innerhalb von 1 bis vier Stunden aus und wies eine gute mechanische und chemische Beständigkeit, insbesondere gegen Wasser und Haushaltschemikalien, auf. Die Beschichtung wies zudem ein angenehmes Griffempfinden auf.

Die in den nachfolgenden Punkten beschriebenen Gegenstände stellen weitere Ausführungsformen der Erfindung dar:
1. Wässrige Zusammensetzung enthaltend, jeweils bezogen auf das Gesamtgewicht der Zusammensetzung,
   a. 3 bis 25 Gew.-% Bindemittel,
   b. 5 bis 25 Gew.-% Vernetzungspolymer,
   c. 0,5 bis 10 Gew.-% Partikel mit einer mittleren Partikelgröße von 1 bis 20 µm,
   d. 0,01 bis 2 Gew.-% einer alkalischen Komponente,
   e. 30 bis 70 Gew.-% Wasser.
2. Wässrige Zusammensetzung gemäß Punkt 1, **dadurch gekennzeichnet, dass** das Beschichtungsmittel 5 bis 20 Gew.-%, insbesondere 8 bis 15 Gew.-% oder 10 bis 13 Gew.-%, Bindemittel enthält, jeweils bezogen auf das Gesamtgewicht der Zusammensetzung.
3. Wässrige Zusammensetzung gemäß einem der Punkte 1 oder 2, **dadurch gekennzeichnet, dass** das Bindemittel ein Polymer ist, insbesondere ausgewählt aus der Gruppe bestehend aus, Polyurethane, Polyester-Polyurethane, anionische Polyesterpolyurethane, aliphatische anionische Polyesterpolyurethane Polycarbonatesterpolyurethane, Polyetherpolyole, Polyacrylatdispersionen, Alkydemulsionen, sowie deren hydroxyfunktionelle Polymere und Mischungen davon.
4. Wässrige Zusammensetzung gemäß einem der vorstehenden Punkte, **dadurch gekennzeichnet, dass** das Bindemittel in Form einer wässrigen Dispersion oder als Mischung zweier wässriger Bindemitteldispersionen je mit einem Feststoffgehalt von 25 bis 60 Gew.-%, insbesondere 30 bis 50 Gew.-% oder 35 bis 40 Gew.-%, vorliegt.
5. Wässrige Zusammensetzung gemäß einem der vorstehenden Punkte, **dadurch gekennzeichnet, dass** die Zusammensetzung 8 bis 22 Gew.-%, insbesondere 10 bis 20 Gew.-% oder 13 bis 17 Gew.-%, des Vernetzungspolymers enthält, jeweils bezogen auf das Gesamtgewicht der Zusammensetzung.
6. Wässrige Zusammensetzung gemäß einem der vorstehenden Punkte, **dadurch gekennzeichnet, dass** das Vernetzungspolymer mindestens eine Carboxylgruppe und/oder mindestens eine Hydroxylgruppe und/oder mindestens eine Aminogruppe, insbesondere mindestens eine Carboxylgruppe, aufweist und/oder ausgewählt ist aus der Gruppe bestehend aus anionische Polyurethane, aliphatische anionische Polyurethane, acrylsäurehaltige Polymere Polyurethan-Acrylatemulsionen, Polyurethan-Alkydemulsionen, Polyurethane, Polyester-Polyurethane, anionische Polyesterpolyurethane, aliphatische anionische Polyesterpolyurethane, Polycarbonatesterpolyurethane, Polyetherpolyole, Polyacrylatdispersionen, Alkydemulsionen, sowie deren hydroxyfunktionelle Polymere und Mischungen davon.
7. Wässrige Zusammensetzung gemäß einem der vorstehenden Punkte, **dadurch gekennzeichnet, dass** die Zusammensetzung 1 bis 8 Gew.-%, insbesondere 2 bis 7 Gew.-% oder 3 bis 6 Gew.-%, Partikel mit einer mittleren Partikelgröße von 1 bis 20 µm enthält, jeweils bezogen auf das Gesamtgewicht der Zusammensetzung.
8. Wässrige Zusammensetzung gemäß einem der vorstehenden Punkte, **dadurch gekennzeichnet, dass** die Partikel mit einer mittleren Partikelgröße von 1 bis 20 µm eine mittlere Partikelgröße von 2 bis 17 µm, insbesondere von 3 bis 15 µm oder von 4 bis 13 µm oder von 6 bis 10 µm aufweisen und/oder ausgewählt sind aus der Gruppe bestehend aus Polyurethanpartikel, Polymethylmethacrylatpartikel, Polymethylharnstoffpartikel, Silikatacrylharz-Polymerpartikel, polymere Mikrohohlkugeln, Cellulosefasern, Textilfasern, Korkmehl und Mischungen davon, insbesondere Silikatacrylharz-Polymerpartikel sind.
9. Wässrige Zusammensetzung gemäß einem der vorstehenden Punkte, **dadurch gekennzeichnet, dass** die Zusammensetzung 0,01 bis 1 Gew.-%, insbesondere 0,01 bis 0,05 Gew.-% der alkalischen Komponente enthält, jeweils bezogen auf das Gesamtgewicht der Zusammensetzung, und/oder dass die alkalische Komponente ausgewählt ist aus der Gruppe bestehend aus Kaliumhydroxid, Natriumhydroxid, Calciumhydroxid, Ammoniak, Triethylamin, Dimethylaminoethanol, Aminomethylpropanol, Dimethylglucamin und Mischungen davon und/oder dass die alkalische Komponente im Reinzustand ein wasserlösliches Gas ist und/oder dass die alkalische Komponente in Form einer wässrigen Lösung vorliegt, insbesondere Salmiakgeist ist.
10. Wässrige Zusammensetzung gemäß einem der vorstehenden Punkte, **dadurch gekennzeichnet, dass** die Zusammensetzung zusätzlich 0,1 bis 5 Gew.-%, insbesondere 0,1 bis 3 Gew.-% oder 0,5 bis 1,5 Gew.-%, Mattierungsmittel enthält, jeweils bezogen auf das Gesamtgewicht der Zusammensetzung.
11. Wässrige Zusammensetzung gemäß Punkt 10, **dadurch gekennzeichnet, dass** das Mattierungsmittel ausgewählt ist aus der Gruppe bestehend aus pyrogene Kieselsäure, Polymethylharnstoff, keramische Mikrokugeln, Diatomeenerde, Quarzmehle, Talkum und Wachsadditive wie Polyethylenwachse und/oder eine mittlere Partikelgröße, insbesondere einen D₅₀-Wert, von 1 bis 20 µm, insbesondere von 5 bis 15 µm, insbesondere von 7 bis 13 µm, insbesondere von 8 bis 12 µm, insbesondere von 9 bis 11 µm, aufweist.
12. Wässrige Zusammensetzung gemäß einem der vorstehenden Punkte, **dadurch gekennzeichnet, dass** die Zusammensetzung zusätzlich mindestens ein Pigment enthält.
13. Wässrige Zusammensetzung gemäß einem der vorstehenden Punkte, **dadurch gekennzeichnet, dass** die Zusammensetzung zusätzlich ein oder mehrere weitere Zusätze und/oder Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthält.
14. Verfahren zur Herstellung einer wässrigen Zusammensetzung gemäß einem der Punkte 1 bis 13, umfassend die Schritte
   a. Bereitstellen einer Zusammensetzung enthaltend, jeweils bezogen auf das Gesamtgewicht der Zusammensetzung,
      i. 3 bis 25 Gew.-% Bindemittel,
      ii. 5 bis 25 Gew.-% Vernetzungspolymer,
      iii. 0,5 bis 10 Gew.-% Partikel mit einer mittleren Partikelgröße von 1 bis 20 µm,
      iv. 0,01 bis 2 Gew.-% einer alkalischen Komponente,
      v. 30 bis 70 Gew.-% Wasser,
   b. Dispergieren der in a. genannten Komponenten.
15. Verfahren nach Punkt 14, **dadurch gekennzeichnet, dass** die Zusammensetzung 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Vernetzungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-% der alkalische Komponente und/oder zusätzlich 0,1 bis 5 Gew.-%, insbesondere 0,1 bis 3 Gew.-% oder 0,5 bis 1,5 Gew.-%, Mattierungsmittel enthält, jeweils bezogen auf das Gesamtgewicht der Zusammensetzung.
16. Verfahren nach einem der Punkte 14 oder 15, **dadurch gekennzeichnet, dass** das Bindemittel gemäß einem der Punkte 3 oder 4 und/oder das Vernetzungspolymer gemäß Punkt 6 und/oder die Partikel mit einer mittleren Partikelgröße von 1 bis 20 µm gemäß Punkt 8 und/oder die alkalische Komponente gemäß Punkt 9 und/oder das optionale Mattierungsmittel gemäß Punkt 11 definiert ist und/oder die Zusammensetzung zusätzlich mindestens ein Pigment und/oder ein oder mehrere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthält.
17. Wässrige Zusammensetzung erhältlich nach einem Verfahren gemäß einem der Punkte 14 bis 16.
18. Kit-of-parts umfassend eine wässrige Zusammensetzung gemäß einem der Punkte 1 bis 13 oder 17 sowie einen Härter.
19. Kit-of-parts gemäß Punkt 18, **dadurch gekennzeichnet, dass** der Härter ein Mittel ist, das in der Lage ist mit Carboxylgruppen einen Aktivester zu bilden, insbesondere Carbodiimid, insbesondere polymeres Carbodiimid, ist.
20. Wässriges Beschichtungsmittel enthaltend, jeweils bezogen auf das Gesamtgewicht des Beschichtungsmittels,
   a. 3 bis 25 Gew.-% Bindemittel,
   b. 5 bis 25 Gew.-% Vernetzungspolymer,
   c. 0,5 bis 10 Gew.-% Partikel mit einer mittleren Partikelgröße von 1 bis 20 µm,
   d. 0,01 bis 2 Gew.-% einer alkalischen Komponente,
   e. 0,5 bis 5 Gew.-% Härter,
   f. 30 bis 70 Gew.-% Wasser.
21. Wässriges Beschichtungsmittel nach Punkt 20, **dadurch gekennzeichnet, dass** das Beschichtungsmittel 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Vernetzungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-%, der alkalischen Komponente und/oder 0,5 bis 4 Gew.-%, insbesondere 1 bis 2 Gew.-% Härter und/oder zusätzlich 0,1 bis 5 Gew.-%, insbesondere 0,1 bis 3 Gew.-% oder 0,5 bis 1,5 Gew.-%, Mattierungsmittel enthält, jeweils bezogen auf das Gesamtgewicht des Beschichtungsmittels.
22. Wässriges Beschichtungsmittel nach Punkt 20 oder 21, **dadurch gekennzeichnet, dass** das Bindemittel gemäß einem der Punkte 3 oder 4 und/oder das Vernetzungspolymer gemäß Punkt 6 und/oder die Partikel mit einer mittleren Partikelgröße von 1 bis 20 µm gemäß Punkt 8 und/oder die alkalische Komponente gemäß Punkt 9 und/oder das optionale Mattierungsmittel gemäß Punkt 11 und/oder der Härter gemäß Punkt 19 definiert ist und/oder die Zusammensetzung zusätzlich mindestens ein Pigment und/oder ein oder mehrere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthält.
23. Verwendung eines wässrigen Beschichtungsmittels gemäß einem der Punkte 20 bis 22 als Lack, insbesondere im Innen- und/oder Außenbereich.

## Patentansprüche

1. Wässrige Zusammensetzung enthaltend, jeweils bezogen auf das Gesamtgewicht der Zusammensetzung,
a. 3 bis 25 Gew.-% Bindemittel,
b. 5 bis 25 Gew.-% Vernetzungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 30 bis 70 Gew.-% Wasser.

2. Wässrige Zusammensetzung gemäß Anspruch 1, **dadurch gekennzeichnet, dass** das Beschichtungsmittel 5 bis 20 Gew.-%, insbesondere 8 bis 15 Gew.-% oder 10 bis 13 Gew.-%, Bindemittel enthält, jeweils bezogen auf das Gesamtgewicht der Zusammensetzung; und/oder dass das Bindemittel ein Polymer ist, insbesondere ausgewählt aus der Gruppe bestehend aus, Polyurethane, PolyesterPolyurethane, anionische Polyesterpolyurethane, aliphatische anionische Polyesterpolyurethane Polycarbonatesterpolyurethane, Polyetherpolyole, Polyacrylatdispersionen, Alkydemulsionen, sowie deren hydroxyfunktionelle Polymere und Mischungen davon; und/oder dass das Bindemittel in Form einer wässrigen Dispersion oder als Mischung zweier wässriger Bindemitteldispersionen je mit einem Feststoffgehalt von 25 bis 60 Gew.-%, insbesondere 30 bis 50 Gew.-% oder 35 bis 40 Gew.-%, vorliegt.

3. Wässrige Zusammensetzung gemäß einem der vorstehenden Ansprüche, **dadurch gekennzeichnet, dass** die Zusammensetzung 8 bis 22 Gew.-%, insbesondere 10 bis 20 Gew.-% oder 13 bis 17 Gew.-%, des Vernetzungspolymers enthält, jeweils bezogen auf das Gesamtgewicht der Zusammensetzung; und/oder dass das Vernetzungspolymer mindestens eine Carboxylgruppe und/oder mindestens eine Hydroxylgruppe und/oder mindestens eine Aminogruppe, insbesondere mindestens eine Carboxylgruppe, aufweist und/oder ausgewählt ist aus der Gruppe bestehend aus anionische Polyurethane, aliphatische anionische Polyurethane, acrylsäurehaltige Polymere Polyurethan-Acrylatemulsionen, Polyurethan-Alkydemulsionen, Polyurethane, Polyester-Polyurethane, anionische Polyesterpolyurethane, aliphatische anionische Polyesterpolyurethane, Polycarbonatesterpolyurethane, Polyetherpolyole, Polyacrylatdispersionen, Alkydemulsionen, sowie deren hydroxyfunktionelle Polymere und Mischungen davon.

4. Wässrige Zusammensetzung gemäß einem der vorstehenden Ansprüche, **dadurch gekennzeichnet, dass** die Zusammensetzung 1 bis 8 Gew.-%, insbesondere 2 bis 7 Gew.-% oder 3 bis 6 Gew.-%, Partikel mit einer mittleren Partikelgröße von 1 bis 20 µm enthält, jeweils bezogen auf das Gesamtgewicht der Zusammensetzung; und/oder dass die Partikel mit einer mittleren Partikelgröße von 1 bis 20 µm eine mittlere Partikelgröße von 2 bis 17 µm, insbesondere von 3 bis 15 µm oder von 4 bis 13 µm oder von 6 bis 10 µm aufweisen und/oder ausgewählt sind aus der Gruppe bestehend aus Polyurethanpartikel, Polymethylmethacrylatpartikel, Polymethylharnstoffpartikel, Silikatacrylharz-Polymerpartikel, polymere Mikrohohlkugeln, Cellulosefasern, Textilfasern, Korkmehl und Mischungen davon, insbesondere Silikatacrylharz-Polymerpartikel sind.

5. Wässrige Zusammensetzung gemäß einem der vorstehenden Ansprüche, **dadurch gekennzeichnet, dass** die Zusammensetzung 0,01 bis 1 Gew.-%, insbesondere 0,01 bis 0,05 Gew.-% der alkalischen Komponente enthält, jeweils bezogen auf das Gesamtgewicht der Zusammensetzung, und/oder dass die alkalische Komponente ausgewählt ist aus der Gruppe bestehend aus Kaliumhydroxid, Natriumhydroxid, Calciumhydroxid, Ammoniak, Triethylamin, Dimethylaminoethanol, Aminomethylpropanol, Dimethylglucamin und Mischungen davon und/oder dass die alkalische Komponente im Reinzustand ein wasserlösliches Gas ist und/oder dass die alkalische Komponente in Form einer wässrigen Lösung vorliegt, insbesondere Salmiakgeist ist.

6. Wässrige Zusammensetzung gemäß einem der vorstehenden Ansprüche, **dadurch gekennzeichnet, dass** die Zusammensetzung zusätzlich 0,1 bis 5 Gew.-%, insbesondere 0,1 bis 3 Gew.-% oder 0,5 bis 1,5 Gew.-%, Mattierungsmittel enthält, jeweils bezogen auf das Gesamtgewicht der Zusammensetzung, wobei das Mattierungsmittel optional ausgewählt ist aus der Gruppe bestehend aus pyrogene Kieselsäure, Polymethylharnstoff, keramische Mikrokugeln, Diatomeenerde, Quarzmehle, Talkum und Wachsadditive wie Polyethylenwachse und/oder eine mittlere Partikelgröße, insbesondere einen D₅₀-Wert, von 1 bis 20 µm, insbesondere von 5 bis 15 µm, insbesondere von 7 bis 13 µm, insbesondere von 8 bis 12 µm, insbesondere von 9 bis 11 µm, aufweist.

7. Wässrige Zusammensetzung gemäß einem der vorstehenden Ansprüche, **dadurch gekennzeichnet, dass** die Zusammensetzung zusätzlich mindestens ein Pigment enthält; und/oder dass die Zusammensetzung zusätzlich ein oder mehrere weitere Zusätze und/oder Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthält.

8. Verfahren zur Herstellung einer wässrigen Zusammensetzung gemäß einem der Ansprüche 1 bis 7, umfassend die Schritte
a. Bereitstellen einer Zusammensetzung enthaltend, jeweils bezogen auf das Gesamtgewicht der Zusammensetzung,
i. 3 bis 25 Gew.-% Bindemittel,
ii. 5 bis 25 Gew.-% Vernetzungspolymer,
iii. 0,5 bis 10 Gew.-% Partikel mit einer mittleren Partikelgröße von 1 bis 20 µm,
iv. 0,01 bis 2 Gew.-% einer alkalischen Komponente,
v. 30 bis 70 Gew.-% Wasser,
b. Dispergieren der in a. genannten Komponenten.

9. Verfahren nach Anspruch 8, **dadurch gekennzeichnet, dass** die Zusammensetzung 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Vernetzungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-% der alkalische Komponente und/oder zusätzlich 0,1 bis 5 Gew.-%, insbesondere 0,1 bis 3 Gew.-% oder 0,5 bis 1,5 Gew.-%, Mattierungsmittel enthält, jeweils bezogen auf das Gesamtgewicht der Zusammensetzung.

10. Verfahren nach einem der Ansprüche 8 oder 9, **dadurch gekennzeichnet, dass** das Bindemittel gemäß Anspruch 2 und/oder das Vernetzungspolymer gemäß Anspruch 3 und/oder die Partikel mit einer mittleren Partikelgröße von 1 bis 20 µm gemäß Anspruch 4 und/oder die alkalische Komponente gemäß Anspruch 5 und/oder das optionale Mattierungsmittel gemäß Anspruch 6 definiert ist und/oder die Zusammensetzung zusätzlich mindestens ein Pigment und/oder ein oder mehrere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthält.

11. Wässrige Zusammensetzung erhältlich nach einem Verfahren gemäß einem der Ansprüche 8 bis 10.

12. Kit-of-parts umfassend eine wässrige Zusammensetzung gemäß einem der Ansprüche 1 bis 7 oder 11 sowie einen Härter, wobei der Härter optional ein Mittel ist, das in der Lage ist mit Carboxylgruppen einen Aktivester zu bilden, insbesondere Carbodiimid, insbesondere polymeres Carbodiimid, ist.

13. Wässriges Beschichtungsmittel enthaltend, jeweils bezogen auf das Gesamtgewicht des Beschichtungsmittels,
a. 3 bis 25 Gew.-% Bindemittel,
b. 5 bis 25 Gew.-% Vernetzungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 0,5 bis 5 Gew.-% Härter,
f. 30 bis 70 Gew.-% Wasser.

14. Wässriges Beschichtungsmittel nach Anspruch 13, **dadurch gekennzeichnet, dass** das Beschichtungsmittel 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Vernetzungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-%, der alkalischen Komponente und/oder 0,5 bis 4 Gew.-%, insbesondere 1 bis 2 Gew.-% Härter und/oder zusätzlich 0,1 bis 5 Gew.-%, insbesondere 0,1 bis 3 Gew.-% oder 0,5 bis 1,5 Gew.-%, Mattierungsmittel enthält, jeweils bezogen auf das Gesamtgewicht des Beschichtungsmittels; und/oder das Bindemittel gemäß Anspruch 2 und/oder das Vernetzungspolymer gemäß Anspruch 3 und/oder die Partikel mit einer mittleren Partikelgröße von 1 bis 20 µm gemäß Anspruch 4 und/oder die alkalische Komponente gemäß Anspruch 5 und/oder das optionale Mattierungsmittel gemäß Anspruch 6 und/oder der Härter gemäß Anspruch 12 definiert ist und/oder die Zusammensetzung zusätzlich mindestens ein Pigment und/oder ein oder mehrere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthält.

15. Verwendung eines wässrigen Beschichtungsmittels gemäß einem der Ansprüche 13 oder 14 als Lack, insbesondere im Innen- und/oder Außenbereich.
